# DEMANDE DE BREVET EUROPEEN

(11) **EP 1 726 462 A1**
(43) Date de publication de la demande: **29.11.2006**
(21) Numéro de dépôt: 06008146.0
(22) Date de dépôt: 20.04.2006
(51) Int. Cl.: B60H 1/00

(54) **Module autonome de climatisation notamment destiné au traitement thermique d'une zone de l'habitacle d'un véhicule**

(30) Priorité: 27.05.2005 FR 0505337
(71) Demandeur: VALEO SYSTEMES THERMIQUES, 78321 Le Mesnil St Denis Cedex (FR)
(72) Inventeur: Elliot, Gilles, 91080 Courcouronnes (FR); Feuillard, Vincent, 78320 Le Mesnil St Denis (FR); Roy, David, 75018 Paris (FR)

(57) **Abrégé**

L'invention a pour objet un module de ventilation, de chauffage et/ou de climatisation d'une zone (5) à traiter thermiquement de l'habitacle (1) d'un véhicule. Ce module (2) comprend un dispositif de traitement thermique (7) comportant une enceinte (38) et un pulseur (12) pour prélever de l'air de l'habitacle (1), faire circuler cet air à l'intérieur de l'enceinte (38), et évacuer l'air vers la zone (5) à traiter. Une cellule de type Peltier (18) est logée à l'intérieur de l'enceinte (38), qui comporte un premier canal (16) de circulation de l'air admis le long de la première face (21) de la cellule Peltier (18), préalablement à son évacuation vers la zone (5) à traiter, et un deuxième canal (17) de circulation de l'air admis le long de la deuxième face (22) de la cellule Peltier (18), préalablement à son évacuation hors de la zone (5) à traiter.

## Description

### Domaine technique de l'invention.

La présente invention est du domaine des installations de ventilation, de chauffage et/ou de climatisation, notamment pour l'habitacle d'un véhicule. Elle a pour objet un module autonome de ventilation, de chauffage et/ou de climatisation destiné au traitement thermique d'une zone spécifique de l'habitacle, telle que sa zone arrière.

### Etat de la technique.

Il est connu d'exploiter une installation principale de ventilation, de chauffage et/ou de climatisation pour traiter thermiquement la zone arrière de l'habitacle d'un véhicule. L'installation principale étant située à l'avant du véhicule, il est courant d'acheminer l'air traité par l'installation principale vers la zone arrière de l'habitacle au moyen d'un conduit spécifique. Un inconvénient d'une telle organisation du traitement thermique de la zone arrière réside dans les pertes aérauliques et thermiques occasionnées au cours de l'acheminement de l'air à travers le conduit. Il en résulte une efficacité réduite du traitement thermique de la zone arrière de l'habitacle. Par ailleurs, l'encombrement du conduit nécessite un aménagement spécifique pour son passage de l'avant à l'arrière de l'habitacle. Enfin, le traitement thermique de la zone arrière de l'habitacle est dépendant de celui de la zone avant.

Pour répondre à ces inconvénients, il a été proposé d'organiser le traitement thermique de la zone arrière de l'habitacle du véhicule à partir d'une installation secondaire spécifique de ventilation, de chauffage et/ou de climatisation, par exemple placée entre les sièges arrière, voire dans le coffre du véhicule. Une telle organisation induit un encombrement et des coûts qu'il est souhaitable de réduire. Par ailleurs, l'installation secondaire comporte une boucle de climatisation à l'intérieur de laquelle circule un fluide caloporteur dont on cherche à réduire la quantité nécessaire par véhicule, pour réduire les coûts relatifs à l'aération du véhicule et pour minimiser les risques de fuite du fluide caloporteur à l'intérieur de l'habitacle.

Il a donc été proposé de traiter thermiquement la zone arrière de l'habitacle du véhicule à partir de la mise en oeuvre d'au moins un module autonome de ventilation, de chauffage et/ou de climatisation comportant un pulseur et au moins une cellule de type Peltier alimentée en énergie électrique par une source d'énergie polarisée.

Par exemple le document FR2843446 (PEUGEOT CITROEN AUTOMOBILES SA) propose d'utiliser un module de traitement thermique mettant en oeuvre une cellule Peltier dont l'une des faces est exploitée pour le traitement thermique de la zone à traiter. Cette cellule Peltier est en relation avec une boucle de régulation thermique, à l'intérieur de laquelle circule un fluide caloporteur, et un extracteur thermique, tel qu'une buse ou un radiateur.

Par exemple encore, le document WO9910191 (PROTASIEWYTCH ELOIR FERNANDO) propose d'utiliser un module de traitement thermique mettant en oeuvre une cellule Peltier dont l'une des faces est exploitée pour le traitement thermique de la zone à traiter. Cette cellule Peltier est en relation avec une boucle de régulation thermique équipée d'une pompe pour favoriser la circulation du fluide caloporteur.

De tels modules présentent l'inconvénient de comporter un nombre important d'éléments qui génèrent un encombrement et des coûts excessifs. De plus, ces éléments sont consommateurs d'une quantité d'énergie qu'il est souhaitable de minimiser. Enfin, l'organisation générale de ces éléments entre eux se révèle être complexe pour un module souhaité compact, léger et facile à installer dans l'habitacle.

### Objet de l'invention.

Le but de la présente invention est de proposer un module de ventilation, de chauffage et/ou de climatisation qui remédie aux inconvénients susvisés. Plus particulièrement, il est visé par la présente invention de proposer un tel module dont l'organisation générale soit simple avec un nombre le plus réduit possible d'éléments, qui présentent un faible encombrement et dont l'installation soit aisée au regard de l'espace disponible dans l'habitacle du véhicule. Il est aussi visé de proposer un tel module dont la dépendance vis-à-vis de la mise en oeuvre d'autres organes du véhicule soit la plus réduite possible. Il est encore visé de proposer un tel module dont l'alimentation en énergie électrique et le contrôle de son fonctionnement soient les plus simples et les plus efficaces possible. Il est enfin visé de proposer un tel module qui soit apte à traiter thermiquement indépendamment des zones spécifiques de l'habitacle, à partir d'un choix de mise en oeuvre du module qui soit simple à opérer.

Le module de la présente invention est un module de ventilation, de chauffage et/ou de climatisation d'une zone à traiter thermiquement de l'habitacle d'un véhicule. Ce module comprend au moins un dispositif de traitement thermique comportant une enceinte en relation avec au moins un pulseur, pour prélever de l'air de l'habitacle et faire circuler cet air à l'intérieur de l'enceinte, puis pour évacuer l'air vers la zone à traiter.

Selon la présente invention, au moins une cellule de type Peltier est logée à l'intérieur de l'enceinte, qui comporte un premier canal de circulation de l'air admis le long d'une première face de la cellule Peltier, préalablement à son évacuation vers la zone à traiter, et un deuxième canal de circulation de l'air admis le long d'une deuxième face de la cellule Peltier, préalablement à son évacuation hors de la zone à traiter, et notamment hors de l'habitacle du véhicule.

Plus particulièrement, la cellule est du type présentant deux faces opposées se comportant thermiquement de manière inverse, l'une étant endothermique, l'autre exothermique: Avantageusement, à partir d'une inversion de la polarité de la source d'énergie, le comportement thermique de ses faces est inversé. Le pulseur prélève de l'air dans l'habitacle, une fraction de cet air étant dirigé vers une face de la cellule Peltier, au contact de laquelle l'air subit un échange thermique. Cette face étant soit endothermique, soit exothermique selon la polarité commandée de l'alimentation électrique de la cellule Peltier, il est possible de refroidir ou de réchauffer l'air prélevé qui circule le long de cette face, puis de l'évacuer vers la zone à traiter. L'autre fraction d'air prélevé dans l'habitacle par le pulseur est utilisée pour s'opposer à une variation de température de la deuxième face de la cellule Peltier, cette fraction d'air étant ensuite évacuée hors de la zone à traiter, de préférence hors de l'habitacle du véhicule.

Ledit dispositif est avantageusement équipé de moyens de contrôle de la température de la cellule Peltier et du débit d'air du pulseur.

Les moyens de contrôle sont préférentiellement portés par une carte électronique. Selon une première variante de réalisation, la carte électronique est placée à l'intérieur dudit premier canal. Selon une deuxième variante de réalisation, la carte électronique est placée à l'intérieur dudit deuxième canal, notamment en amont de la deuxième face de la cellule Peltier par rapport au flux d'air circulant à l'intérieur dudit deuxième canal.

Le dispositif est avantageusement logé à l'intérieur d'un boîtier équipé de moyens de fixation sur un élément structurel de l'habitacle. Cet élément structurel est indifféremment le toit ou le plancher, voire une portière du véhicule, un siège ou un appui-tête par exemple. Selon un premier mode de réalisation des moyens de fixation du boîtier, ces derniers sont des moyens de fixation du boîtier sur un rail de toit du véhicule, plus particulièrement disposé sous le toit à l'intérieur de l'habitacle. Selon un deuxième mode de réalisation des moyens de fixation du boîtier, ces derniers sont des moyens d'encastrement du boîtier dans le plafonnier du véhicule.

Le boîtier loge avantageusement le pulseur dans une première chambre, qui est en communication avec l'enceinte formée d'une deuxième chambre du boîtier.

Le boîtier comporte avantageusement au moins une bouche d'admission d'air en relation avec l'entrée d'air du pulseur et au moins deux bouches d'évacuation d'air hors du boîtier, dont une première bouche d'évacuation d'air en communication avec le premier canal et une deuxième bouche d'évacuation d'air en communication avec le deuxième canal.

La bouche d'admission d'air est de préférence ménagée à travers l'une quelconque au moins des parois du boîtier, telle qu'une paroi de dessous, une paroi de dessus ou une paroi latérale du boîtier.

La première bouche d'évacuation d'air est de préférence ménagée à travers l'une quelconque au moins des parois du boîtier, telle qu'une paroi de dessous du boîtier ou une paroi latérale du boîtier.

De préférence, la première bouche d'évacuation d'air est équipée d'au moins un aérateur. Selon un autre mode de réalisation de l'aérateur, ce dernier est conformé en un caisson escamotable et/ou fixe et/ou orientable, tel que monté pivotant ou basculant sur le boîtier.

La deuxième bouche d'évacuation d'air est préférentiellement ménagée à travers au moins une paroi du boîtier, telle qu'une paroi arrière de ce dernier. Selon une forme préférée de réalisation, la deuxième bouche d'évacuation d'air est ménagée à une paroi supérieure du boîtier de sorte que l'évacuation de l'air soit effectuée vers l'extérieur de l'habitacle par l'intermédiaire du toit du véhicule. Selon une première variante de réalisation, la deuxième bouche d'évacuation d'air est en relation avec un conduit additionnel acheminant l'air vers l'extérieur de l'habitacle. Selon une deuxième variante de réalisation, la deuxième bouche d'évacuation d'air est en relation avec un passage d'air ménagé entre le plafonnier et le toit du véhicule. Dans ce cas, le boîtier est susceptible d'être directement rapporté contre le plafonnier du véhicule, de sorte que sa face supérieure soit en communication avec ledit passage d'air. On notera que dans le cas où le boîtier est rapporté contre le plafonnier du véhicule, la totalité de sa face supérieure est susceptible d'être ouverte, le plafonnier formant capot de fermeture de cette face supérieure.

La mise en oeuvre des moyens de contrôle est avantageusement placée sous la dépendance de moyens de commande. Ces moyens de commande sont de préférence portés par le boîtier, et par exemple par une paroi inférieure du boîtier également porteuse de la carte électronique.

De préférence, les moyens de commande comprennent en outre des moyens de commande à distance, du type à infra-rouge, à haute fréquence ou analogue.

Les moyens de commande comportent avantageusement des moyens de sélection du comportement thermique des faces de la cellule Peltier. Par exemple, les moyens de sélection sont associés à des moyens d'inversion de la polarité d'au moins une source d'alimentation électrique des cellules Peltier. Les cellules Peltier étant en pluralité, les moyens de sélection sont susceptibles d'être associés à des moyens de mise en oeuvre sélective entre un premier câblage en mode série des cellules Peltier et un deuxième câblage en mode parallèle de ces dernières.

Le pulseur est indifféremment un pulseur à simple aspiration ou un pulseur à double aspiration.

L'une des faces de la cellule de type Peltier est avantageusement équipée d'un organe de dissipation d'énergie thermique.

Selon une variante préférée de réalisation de la présente invention, le module comporte deux dispositifs de traitement thermique destinés à traiter indépendamment une zone respective de l'habitacle. Dans ce cas, le boîtier loge préférentiellement en adjacence lesdits dispositifs de traitement thermique.

### Description des figures.

La présente invention sera mieux comprise, et des détails en relevant apparaîtront, à la lecture de la description qui va en être faite en relation avec les figures des planches annexées, dans lesquelles :
La fig.1 est une vue schématique en coupe de l'habitacle d'un véhicule équipé de deux modules de ventilation, de chauffage et/ou de climatisation selon l'invention. Les fig.2 et fig.3 sont des schémas illustrant des modes respectifs de réalisation d'évacuation d'air hors d'un module de l'invention, vers l'extérieur du véhicule.
Les fig.4 et fig.5 sont des vues schématiques en coupe de formes respectives de réalisation de l'un des modules représentés sur la fig.1.
Les fig.6 et fig.7 sont des vues schématiques respectives de modes de câblage des cellules Peltier que comportent les modules illustrés sur les fig.4 et fig.5.
Les fig.8 à fig.12 sont des vues schématiques en coupe de cellules Peltier équipant un module de l'invention, équipées de dissipateurs thermiques.
La fig.13 est une vue schématique en perspective d'une variante de réalisation d'un module représenté sur les fig.1 et fig.2.

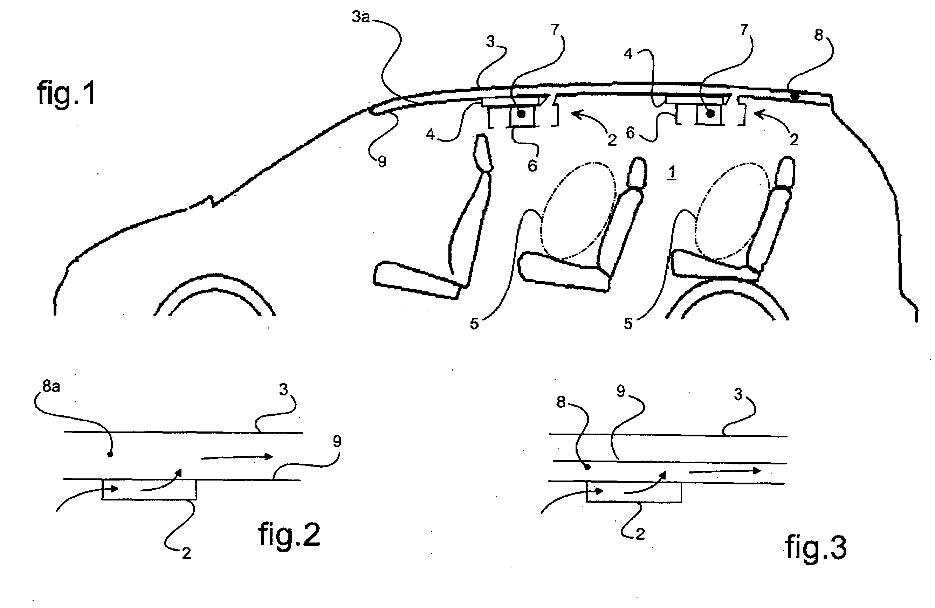

Sur la fig.1, l'habitacle (1) d'un véhicule est équipé de deux modules (2) autonomes de ventilation, de chauffage et/ou de climatisation, qui sont fixés au plafonnier (9) de toit (3) du véhicule. Cette fixation est réalisée par exemple par l'intermédiaire de rails de fixation (4) intérieur à l'habitacle (1) du véhicule ou par encastrement à l'intérieur de logements ménagés dans le plafonnier (9). Selon des variantes de réalisation non représentées, le module (2) est susceptible d'être fixé sur un autre élément structurel de l'habitacle (1) du véhicule, tel que le plancher ou une portière, ou encore un siège ou un appui-tête. D'une manière générale, le module peut être fixé sur un quelconque élément structurel du véhicule et/ou de son habitacle, préférentiellement proche de la zone (5) à traiter.

Chaque module (2) est destiné à traiter thermiquement une zone spécifique (5) de l'habitacle (1), telle que selon l'exemple illustré l'une des rangées de sièges arrière d'un véhicule du type monospace, en vue d'améliorer indépendamment le confort thermique des passagers occupant ces zones (5). Les zones (5) à traiter du véhicule sont notamment des zones occupées ou occupables par au moins un passager, entourées d'un volume d'air à traiter thermiquement.

Chaque module (2) comprend un boîtier (6) logeant un dispositif de traitement thermique (7) destiné à prélever de l'air dans l'habitacle (1), à refroidir et/ou réchauffer une partie de l'air prélevé avant de l'évacuer vers une zone (5) à traiter, et inversement à réchauffer et/ou refroidir l'autre partie de l'air prélevé avant de l'évacuer vers l'extérieur de l'habitacle (1), ou tout au moins au-delà de la zone (5) à traiter.

Sur les fig.2 et fig.3, un module (2) est fixé au plafonnier (9) du véhicule. Selon la configuration du véhicule, l'espace compris entre le toit (3) et le plafonnier (9), lorsqu'il est suffisant, est mis à profit pour l'acheminement de l'air vers l'extérieur de l'habitacle (1), tel que représenté sur la fig.2. Dans le cas où cet espace n'est pas suffisant, un conduit additionnel (39) est raccordé au module pour l'évacuation de l'air, tel que représenté sur la fig.3.

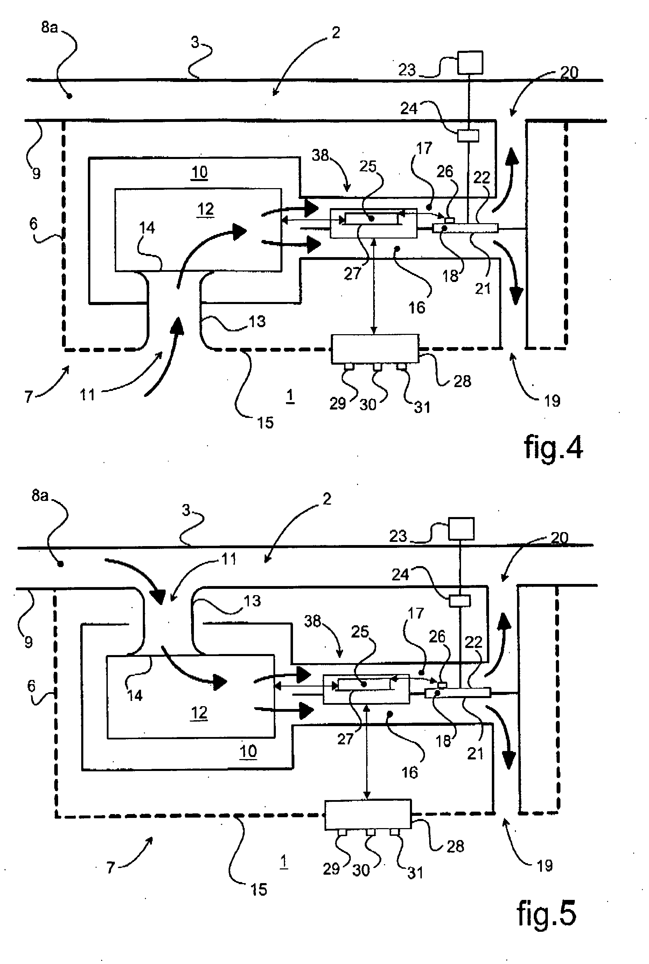

Sur les fig.4 et fig.5, le boîtier (6) comporte une première chambre (10) en communication avec l'habitacle (1) du véhicule par l'intermédiaire d'une bouche d'admission d'air (11) ménagée dans une paroi du boîtier (6). Sur la variante représentée sur la fig.4, cette paroi est une paroi inférieure (15) du boîtier, l'air étant prélevé à l'intérieur de l'habitacle (1). Sur la variante représentée sur la fig.5, cette paroi est la paroi supérieure (40) du boîtier (6), l'air étant prélevé dans l'habitacle (1) à l'intérieur de l'espace compris entre le toit (3) et le plafonnier (9), pour limiter les bruits induits par le pulseur et susceptibles d'être une source d'inconfort pour les passagers.

L'air est admis à l'intérieur de la première chambre (10) au moyen d'un pulseur (12) logé dans cette dernière (10). Le pulseur (12) est indifféremment un pulseur à simple ou à double aspiration. Dans le cas d'un pulseur à simple aspiration, comme illustré sur les fig.4 et fig.5, une virole d'aspiration (13) est susceptible d'être interposée entre la bouche d'admission d'air (11) et l'entrée d'air (14) du pulseur (12). Diverses configurations d'agencement de la bouche d'admission d'air (11) de la première chambre (10) et de l'entrée d'air (14) du pulseur (12) sont possibles. Par exemple, sur les fig.4 et fig.5, ladite bouche (11) et ladite entrée (14) sont en vis-à-vis l'une de l'autre pour favoriser l'admission d'air dans la première chambre (10).

La première chambre (10) est en communication avec une deuxième chambre du boîtier (6), formant une enceinte (38) d'échange thermique entre l'air prélevé et une cellule (18) de type Peltier, L'enceinte (38) est principalement constituée de deux canaux (16,17) de circulation d'air, chacun de ces canaux (16,17) étant en relation avec la première chambre (10). Un premier canal (16) est en relation avec une première bouche d'évacuation d'air (19) vers la zone (5) à traiter et un deuxième canal (17) est en relation avec une deuxième bouche d'évacuation (20) d'air hors de la zone (5) à traiter.

La cellule Peltier (18) est logée dans l'enceinte (38) en interposition entre le premier canal (16) et le deuxième canal (17) de sorte qu'une première face (21) de la cellule (18) soit en contact avec l'air circulant dans le premier canal (16) tandis que l'autre face (22) de la cellule (18) est en contact avec l'air circulant dans le deuxième canal (17). La cellule Peltier (18) est alimentée en énergie électrique par une source d'alimentation polarisée (23), notamment la batterie du véhicule, par l'intermédiaire d'une connexion électrique (24) ménagée dans le boîtier (6). Le raccordement du module (2) à la source d'alimentation polarisée (23) est avantageusement réalisé simultanément à la fixation du boîtier (6) sur l'élément structurel (3) du véhicule.

L'une des faces (21,22) de la cellule Peltier étant endothermique et l'autre face étant exothermique, il est possible de refroidir l'air circulant dans un des canaux (16,17), par exemple le premier canal (16), et de réchauffer l'air circulant dans l'autre canal, c'est-à-dire le deuxième canal (17) dans l'exemple choisi. L'air refroidi dans le premier canal (16) est évacué vers la zone (5) à traiter à travers la première bouche d'évacuation (19) tandis que l'air réchauffé dans le deuxième canal (17) est évacué hors de la zone (5) à traiter à travers la deuxième bouche d'évacuation (20). Cet exemple de fonctionnement sera notamment mis en oeuvre en période estivale pour refroidir l'air de la zone (5) à traiter. A partir de l'inversion de la polarité de la source d'alimentation (23), il est possible d'intervertir le comportement thermique des faces (21,22) de la cellule Peltier (18) pour réchauffer l'air circulant dans le premier canal (16) et refroidir l'air circulant dans le deuxième canal (17). L'air refroidi dans le deuxième canal (17) est alors évacué hors de la zone (5) à traiter à travers la deuxième bouche d'évacuation (20) tandis que l'air réchauffé dans le premier canal (16) est quant à lui évacué vers la zone (5) à traiter à travers la première bouche d'évacuation (19). Cet exemple de fonctionnement sera notamment mis en oeuvre en période hivernale pour réchauffer l'air de la zone (5) à traiter.

L'inversion de la polarité de l'alimentation électrique de la cellule Peltier (18) est notamment réalisée à partir d'une commande effectuée par le passager selon son souhait d'aération en air froid ou chaud. Le dispositif de traitement thermique (7) est équipé de moyens de contrôle (25) de la température de la cellule Peltier (18) et du débit d'air du pulseur (12). Ces moyens (25) comportent par exemple un capteur de température (26) placé sur l'une des faces de la cellule Peltier (18) et/ou dans le canal de circulation d'air correspondant. Selon une alternative de réalisation, deux capteurs de température sont placés respectivement sur chacune des faces de la cellule et/ou dans les canaux de circulation d'air correspondants. Les moyens de contrôle (25) sont portés par une carte électronique (27) placée dans le deuxième canal (17) de circulation d'air pour évacuer hors de la zone (5) à traiter une chaleur induite par les composants électroniques portés par ladite carte (27). Les moyens de contrôle (25,26) sont placés sous la dépendance de moyens de commande (28) comportant des organes de sélection (29,30,31), tels que des boutons poussoirs ou des boutons rotatifs, pour déterminer respectivement la température de mise en oeuvre de la cellule Peltier (18) et le débit d'air du pulseur (12). Par exemple, les moyens de commande (28) comportent un organe de sélection (31) entre un mode hiver et un mode été de fonctionnement du dispositif de traitement thermique (2) pour déterminer la polarité de la source d'alimentation (23) de la cellule Peltier (18) et finalement pour choisir de réchauffer ou de refroidir l'air de la zone (5) à traiter.

Les moyens de commande (28) sont portés par la face inférieure (15) du boîtier (6) logeant le dispositif de traitement thermique (2), pour être aisément accessibles à un passager du véhicule et pour être placés au voisinage de la carte électronique (27) portant les moyens de contrôle (25), de sorte que le câblage dudit dispositif (2) soit réduit. Les moyens de commande (28) sont en outre susceptibles d'être mis en oeuvre par des moyens de commande à distance, du type à infra-rouge ou à haute fréquence.

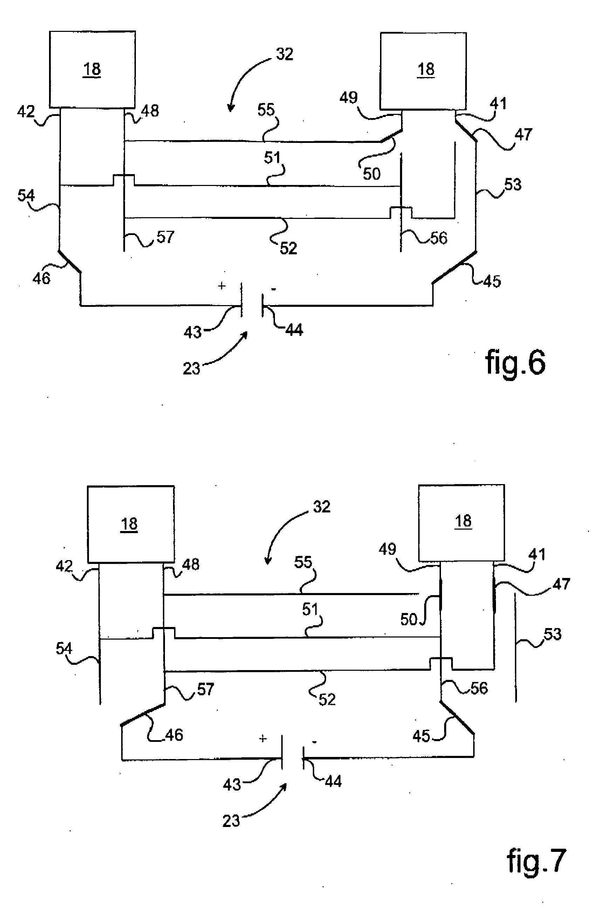

Sur les fig.6 et fig.7, et dans le cas où les cellules Peltier (18) sont en pluralité, le bouton de sélection (31) est un organe de commande entre un premier câblage (32) en mode série des cellules Peltier (18), illustré sur la fig.6, et un deuxième câblage (33) en mode parallèle de ces dernières (18), illustré sur la fig.7. En effet, pour optimiser un refroidissement de l'air évacué vers la zone (5) à traiter, en mode été notamment, il est préférable de monter en série les cellules Peltier (18), tandis que pour optimiser un réchauffement de ce même air, en mode hiver notamment, il est préférable de monter en parallèle ces dernières (18).

Plus particulièrement sur la fig.6, des premières bornes (41,42) des cellules Peltier (18) sont reliées respectivement aux bornes positive (43) et négative (44) de la source d'énergie électrique du véhicule (23). Des contacteurs principaux (45,46) ou analogues sont interposés sur ces liaisons (53,54) de manière à autoriser le passage du courant. Un contacteur additionnel (47) est placé sur l'une de ces liaisons, autorisant le passage du courant. Des deuxièmes bornes (48,49) des cellules Peltier (18) sont reliées entre elles par une liaison secondaire (55), un contacteur secondaire (50) ou analogue étant interposé sur cette liaison secondaire (55) de manière à autoriser le passage du courant. Des dérivations additionnelles (51,52) relient respectivement entre elles les premières bornes (41,42) avec les deuxièmes bornes des cellules Peltier (18), le passage du courant étant interrompu à travers ces dérivations additionnelles.

Sur la fig.7, Les contacteurs principaux (45,46) sont basculés pour inverser la polarité d'alimentation aux bornes (41,42,48,49) des cellules Peltier (18). Le passage du courant s'effectue à travers des liaisons (56,57) reliant respectivement les bornes positive (43) et négative (44) de la source d'alimentation (23) avec les deuxièmes bornes (48,49) des cellules Peltier. Le contacteur additionnel (47) est basculé pour rompre l'alimentation de la cellule Peltier (18) correspondante à sa première borne (41), et pour autoriser le passage du courant à travers la dérivation additionnelle (52) correspondante, en relation avec la liaison (57) reliant la borne positive (43) de la source d'alimentation (23) avec la cellule Peltier (18) correspondante. Le contacteur secondaire (50) est basculé pour rompre le passage du courant à travers la liaison secondaire (55), et pour autoriser le passage du courant d'une part à travers la liaison (56) entre la cellule Peltier (18) correspondante et la borne négative (44) de la source d'alimentation (23), et d'autre part à travers la dérivation additionnelle (51) correspondante reliant entre elles la deuxième borne (49) de l'une des cellule Peltier (18) avec la première borne (42) de l'autre cellule Peltier, la dérivation additionnelle étant en relation avec la liaison (56) reliant la borne négative (44) à la cellule Peltier (18) correspondante.

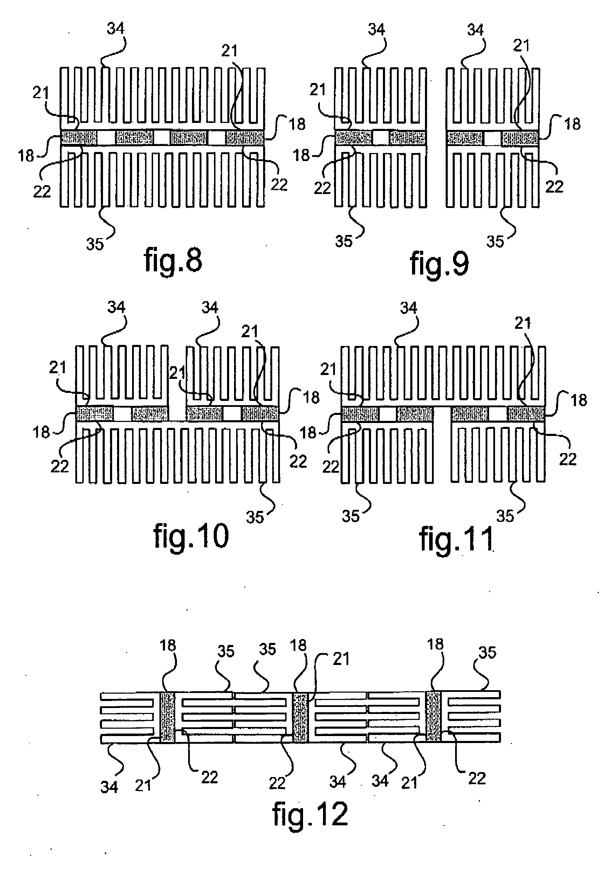

Sur les fig.8 à fig.12, les cellules Peltier (18) sont équipées de dissipateurs thermiques (34,35) à chacune de leurs faces (21,22). Les dissipateurs (34,35) sont par exemple constitués d'un matériau thermiquement conducteur replié sur lui-même. Ce matériau est par exemple de l'aluminium, du graphite, de l'argent ou de l'or et présente une résistance thermique faible de l'ordre de 0,01 à 0,2 K/W en surface. Selon une autre forme de réalisation, les dissipateurs (34,35) sont susceptibles d'être constitués d'un matériau extrudé pour réduire les coûts de fabrication et obtenir des formes complexes. Sur les fig.8 à fig.11, les cellules Peltier (18) sont disposées dans l'enceinte (38) de sorte que les faces à comportement thermique identique soient sensiblement placées dans un même plan. Sur la fig.8, un même premier dissipateur (34) jouxte l'ensemble des faces endothermiques (21) des cellules Peltier (18) tandis qu'un deuxième dissipateur (35) jouxte l'ensemble des faces exothermiques (22) des cellules Peltier (18). Sur la fig.9, les dissipateurs thermiques (34,35) jouxtent les faces endothermiques (21) et exothermiques (22) respectivement de cellules Peltier adjacentes (18). Sur la fig.10, les faces exothermiques (22) de deux cellules Peltier adjacentes (18) sont recouvertes par un même premier dissipateur thermique (34) tandis que les faces endothermiques (21) de l'ensemble des cellules Peltier (18) sont recouvertes d'un unique dissipateur (35). Sur la fig.11, est illustrée une variante inverse à celle représentée sur la fig.10 de l'une à l'autre des faces exothermiques (22) et endothermiques (21). Sur la fig.12, les cellules Peltier (18) sont disposées dans l'enceinte (38) de sorte que les faces à comportement thermique identique soient sensiblement placées en vis-à-vis les unes des autres, chacune des faces (21,22) étant équipée d'un dissipateur thermique respectif (34,35).

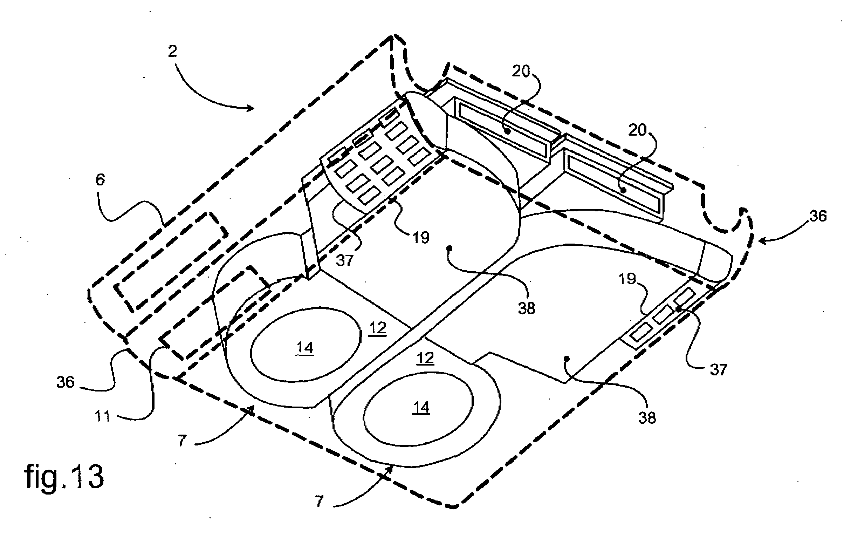

Sur la fig.13, le module (2) comporte deux dispositifs de traitement thermique (7) destinés à traiter deux zones (5) respectives de l'habitacle (1) du véhicule, telle qu'une zone arrière droite et une zone arrière gauche. La bouche d'admission d'air (11) est ménagée à travers une paroi latérale (36) du boîtier (6), indifféremment droite, gauche, avant ou arrière de ce dernier (6), voire à travers plusieurs de ces parois (36). Selon d'autres modes de réalisation non représentés, la bouche d'admission est susceptible d'être ménagée dans une paroi inférieure ou une paroi supérieure du boîtier. Les premières bouches d'évacuation d'air (19), qui sont destinées à rejeter l'air vers la zone (5) à traiter, sont également ménagées dans ladite paroi latérale (36) du boîtier (6). Selon un autre mode de réalisation non représenté, les premières bouches d'évacuation d'air sont susceptibles d'être ménagées dans la paroi inférieure du boîtier. Les premières bouches d'évacuation d'air (19) sont équipées d'aérateurs (37), tels que du type munis d'ailettes inclinables pour orienter le flux d'air sortant à travers les bouches (19). Les aérateurs (37) sont par exemple du type conformés en cylindre et sont susceptibles de pivoter selon 360° autour de leur axe. Selon un autre variante de réalisation non représentée, les aérateurs (37) sont par exemple encore ménagés dans des trappes d'obturation des premières bouches d'évacuation (19), montées basculantes sur le boîtier (6).

Les deuxièmes bouches d'évacuation d'air (20) sont ménagées à travers une paroi latérale (36) du boîtier (6), ou encore selon des variantes non représentées à travers une paroi supérieure du boîtier ou à travers une paroi arrière du boîtier en étant orientées de manière à ne pas perturber le confort thermique des passagers.

## Revendications

1. Module de ventilation, de chauffage et/ou de climatisation d'une zone (5) à traiter thermiquement de l'habitacle (1) d'un véhicule, comprenant au moins un dispositif de traitement thermique (7) comportant une enceinte (38) en relation avec au moins un pulseur (12), pour prélever de l'air de l'habitacle (1) et faire circuler cet air à l'intérieur de l'enceinte (38), puis évacuer l'air vers la zone (5) à traiter, **caractérisé en ce qu'**au moins une cellule de type Peltier (18) est logée à l'intérieur de l'enceinte (38), qui comporte un premier canal (16) de circulation de l'air admis le long d'une première face (21) de la cellule Peltier (18), préalablement à son évacuation vers la zone (5) à traiter, et un deuxième canal (17) de circulation de l'air admis le long d'une deuxième face (22) de la cellule Peltier (18), préalablement à son évacuation hors de la zone (5) à traiter.

2. Module selon la revendication 1, **caractérisé en ce que** ledit dispositif (7) est équipé de moyens de contrôle (25) de la température de la cellule Peltier (18) et du débit d'air du pulseur (12).

3. Module selon la revendication 2, **caractérisé en ce que** les moyens de contrôle (25) sont portés par une carte électronique (27).

4. Module selon la revendication 3, **caractérisé en ce que** la carte électronique (27) est placée à l'intérieur dudit premier canal (16).

5. Module selon la revendication 3, **caractérisé en ce que** la carte électronique (27) est placée à l'intérieur dudit deuxième canal (17).

6. Module selon l'une quelconque des revendications précédentes, **caractérisé en ce que** le dispositif (7) est logé à l'intérieur d'un boîtier (6) équipé de moyens de fixation sur un élément structurel (3) de l'habitacle (1).

7. Module selon la revendication 6, **caractérisé en ce que** le boîtier (6) loge le pulseur (12) dans une première chambre (10) en communication avec l'enceinte (38) formée d'une deuxième chambre du boîtier (6).

8. Module selon la revendication 7, **caractérisé en ce que** le boîtier (6) comporte au moins une bouche d'admission d'air (11) en relation avec l'entrée d'air (14) du pulseur (12) et au moins deux bouches d'évacuation d'air (19,20) hors du boîtier (6), dont une première bouche d'évacuation d'air (19) en communication avec le premier canal (16) et une deuxième bouche d'évacuation d'air (20) en communication avec le deuxième canal (17).

9. Module selon la revendication 8, **caractérisé en ce que** la bouche d'admission d'air (11) est ménagée à travers l'une quelconque au moins des parois du boîtier (6).

10. Module selon l'une quelconque des revendications 8 et 9, **caractérisé en ce que** la première bouche d'évacuation d'air (19) est ménagée à travers l'une quelconque au moins des parois du boîtier (6).

11. Module selon la revendication 10, **caractérisé en ce que** la première bouche d'évacuation d'air (19) est équipée d'au moins un aérateur (37).

12. Module selon la revendication 11, **caractérisé en ce que** l'aérateur (37) est conformé en un caisson escamotable et/ou fixe et/ou orientable.

13. Module selon la revendication 8, **caractérisé en ce que** la deuxième bouche d'évacuation d'air (20) est ménagée à travers au moins une paroi du boîtier (6).

14. Module selon la revendication 13, **caractérisé en ce que** la deuxième bouche d'évacuation d'air (20) est en relation avec un conduit additionnel acheminant l'air vers l'extérieur de l'habitacle.

15. Module selon la revendication 13, **caractérisé en ce que** la deuxième bouche d'évacuation d'air (20) est en relation avec un passage d'air ménagé entre le plafonnier (9) et le toit (3) du véhicule.

16. Module selon la revendication 6, **caractérisé en ce que** les moyens de fixation du boîtier (6) sont des moyens de fixation du boîtier sur un rail (4) de toit (3) du véhicule intérieur à l'habitacle.

17. Module selon la revendication 6, **caractérisé en ce que** les moyens de fixation du boîtier sont des moyens d'encastrement du boîtier (6) dans le plafonnier (9) du véhicule.

18. Module selon la revendication 2, **caractérisé en ce que** la mise en oeuvre des moyens de contrôle (25) est placée sous la dépendance de moyens de commande (28).

19. Module selon la revendication 18, **caractérisé en ce que** les moyens de commande (28) sont portés par le boîtier (6).

20. Module selon la revendication 19, **caractérisé en ce que** les moyens de commande (28) sont portés par une paroi inférieure (15) du boîtier (6) également porteuse de la carte électronique (27).

21. Module selon la revendication 18, **caractérisé en ce que** les moyens de commande (28) comprennent des moyens de commande à distance.

22. Module selon la revendication 18, **caractérisé en ce que** les moyens de commande (28) comportent des moyens de sélection (31) du comportement thermique des faces (21,22) de la cellule Peltier (18).

23. Module selon la revendication 22, **caractérisé en ce que** les moyens de sélection (31) sont associés à des moyens d'inversion de la polarité d'au moins une source d'alimentation électrique (23) de la cellule Peltier (18).

24. Module selon l'une quelconque des revendications 22 et 23, **caractérisé en ce que**, les cellules Peltier (18) étant en pluralité, les moyens de sélection (31) sont associés à des moyens de mise en oeuvre sélective entre un premier câblage (32) en mode série des cellules Peltier (18) et un deuxième câblage (33) en mode parallèle de ces dernières (18).

25. Module selon l'une quelconque des revendications précédentes, **caractérisé en ce que** le pulseur (12) est un pulseur à simple aspiration.

26. Module selon l'une quelconque des revendications 1 à 23, **caractérisé en ce que** le pulseur (12) est un pulseur à double aspiration.

27. Module selon l'une quelconque des revendications précédentes, **caractérisé en ce qu'**au moins l'une des faces (21,22) de la cellule de type Peltier (18) est équipée d'un organe de dissipation d'énergie thermique (34,35).

28. Module selon l'une quelconque des revendications précédentes, **caractérisé en ce qu'**il comporte deux dispositifs de traitement thermique (7) destinés à traiter indépendamment une zone (5) respective de l'habitacle (1).

29. Module selon la revendication 28, **caractérisé en ce que** le boîtier (6) loge en adjacence lesdits dispositifs de traitement thermique (7).
